# EUROPEAN PATENT SPECIFICATION

(11) **EP 4 364 980 B1**
(45) Date of publication and mention of the grant of the patent: **31.12.2025**
(21) Application number: 21948483.9
(22) Date of filing: 02.11.2021
(51) Int. Cl.: B60C 13/00, B60C 19/00, G06K 19/077

(54) **TIRE**
REIFEN
PNEU

(30) Priority: 30.06.2021 JP 2021109743
(43) Date of publication of application: 08.05.2024
(73) Proprietor: BRIDGESTONE CORPORATION, Chuo-ku Tokyo 104-8340 (JP)
(72) Inventor: SHIMURA, Takashi, Tokyo 104-8340 (JP); OSAKA, Takashi, Tokyo 104-8340 (JP); ONO, Hiroaki, Tokyo 104-8340 (JP); HASHIMOTO, Masayuki, Tokyo 104-8340 (JP)
(74) Representative: Marks & Clerk LLP
(86) International application number: PCT/JP2021/040457
(87) International publication number: WO 2023/276180

(56) References cited:
- JP-A- 2004 148 953
- JP-A- 2006 056 443
- JP-A- 2020 079 041
- NL-C1- 1 032 788
- US-A1- 2007 158 436
- US-A1- 2018 117 865
- US-A1- 2020 070 597
- US-B2- 8 004 408

## Description

### TECHNICAL FIELD

The present invention relates to a tire.

The present application claims priority based on JP 2021-109743 that was filed in Japan on June 30, 2021.

### BACKGROUND

Some tires have a communication device (such as an RF tag) arranged between an inner liner and a carcass (Patent Literature (PTL) 1).

US 2018/117865 A1 relates to a tire including a first side and a second side, and a tread portion extending between the first side and the second side. The first side includes external geometry having at least one rib surrounding a recess, without extending into the recess. The recess is configured to receive a tire electronic device.

US 2007/158436 A1 relates to an RFID tag-incorporating bar code label having sufficiently high durability even when the label is attached to a tire and capable of reliable communication with a reader. A dipole antenna type RFID tag is interposed and fixed between a first sheet member whose front surface is printed with a bar code and a second sheet member having an adhesive layer formed on the rear surface, thus fabricating an RFID tag-incorporating bar code label having an RFID tag buried in the central portion of a bar code sheet. The label is bonded to a tire.

NL 1 032 788 C1 relates to a holder made from an elastically deformable material matching that of the tire. The holder has an at least slightly convex, spherical cross-section viewed in a direction at right angles to the holder surface intended for securing to the tire. This convex outer surface protrudes away from the tire. The holder contains a space for locating the identification device.

US 8 004 408 B2 relates to a pneumatic tire with which a search time for a transponder can be reduced, and with which, for a passive transponder functioning with energy transmitted from the outside, efficiency of energy transmission can be enhanced. The pneumatic tire is provided with a transponder has an identification tag, which indicates a position of the transponder, and which is disposed to an outer surface of a portion of the tire, the portion being where the transponder is disposed. Furthermore, for a pneumatic tire having a transponder on a sidewall part thereof, an identification tag, which indicates the position of the transponder, is provided to an outer surface of a portion of the tire, the portion being where the transponder is disposed, and another identification tag, which indicates at least the position of the transponder in the circumferential direction of the tire, is provided to an outer surface of the other sidewall part of the tire, which is on the opposite side of the sidewall part where the transponder is disposed.

### CITATION LIST

### Patent Literature

PTL 1: JP 2004-148953 A

### SUMMARY

### (Technical Problem)

For conventional tires, there is room for improving communication distance.

It would therefore be helpful to provide a tire that enables lengthening of the communication distance.

### (Solution to Problem)

The tire according to the present invention is:
a tire comprising: a marking portion disposed on a tire outer surface of a tire side portion; and
a communication device,
wherein the marking portion has one or more markings,
each of the one or more markings forms a letter, a symbol, or a graphic and is formed into a convex shape,
each of the one or more markings protrudes further in a tire width direction outer side than a base surface of the tire outer surface of the tire side portion, the base surface being a portion of the tire outer surface of the tire side portion that surrounds each of the one or more markings, and
at least a part of the communication device is embedded within at least one of the one or more markings, the at least one of the one or more markings forming a letter.

### (Advantageous Effect)

According to the present invention, a tire that enables lengthening of the communication distance can be provided.

### BRIEF DESCRIPTION OF THE DRAWINGS

In the accompanying drawings:
FIG. 1 is a side view illustrating a portion of a tire side portion of a tire according to a first embodiment of the present invention as viewed from a tire width direction outer side;
FIG. 2 is an enlarged view illustrating an enlargement of a portion of FIG. 1;
FIG. 3 is a cross-sectional view, in the tire width direction, illustrating a portion of the tire of FIG. 2 in cross section along the A-A line in FIG. 2;
FIG. 4 is a perspective view illustrating an example of a communication device that can be used in a tire according to any embodiment of the present invention;
FIG. 5 is an exploded perspective view illustrating the communication device illustrated in FIG. 4 in an exploded state;
FIG. 6 is a side view illustrating a portion of a tire side portion of a tire according to a second embodiment of the present invention as viewed from a tire width direction outer side;
FIG. 7 is a cross-sectional view, in the tire width direction, illustrating a portion of the tire of FIG. 6 in cross section along the B-B line in FIG. 6;
FIG. 8 is a cross-sectional view illustrating a portion of the tire of FIG. 6 in cross section along the C-C line in FIG. 6; and
FIG. 9 is a cross-sectional view, in the tire width direction, illustrating a portion of a tire according to a third embodiment of the present invention.

### DETAILED DESCRIPTION

A tire according to the present invention can be preferably used for any type of pneumatic tire, and can be used, for example, for a passenger vehicle pneumatic tire, a truck/bus pneumatic tire, or the like.

The following describes the embodiments of a tire according to the present invention with reference to the drawings.

Members and portions common between the drawings have the same reference signs. In certain drawings, a tire width direction is denoted by the reference sign "TW", a tire radial direction is denoted by the reference sign "RD", and a tire circumferential direction is denoted by the reference sign "CD". In the present specification, "tire inner side" refers to a side closer to a tire cavity, and "tire outer side" refers to a side farther from the tire cavity.

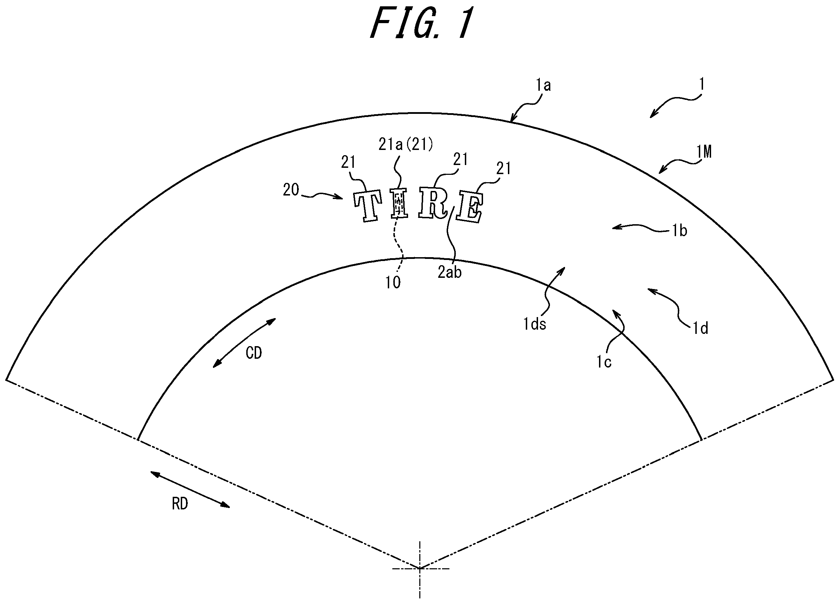

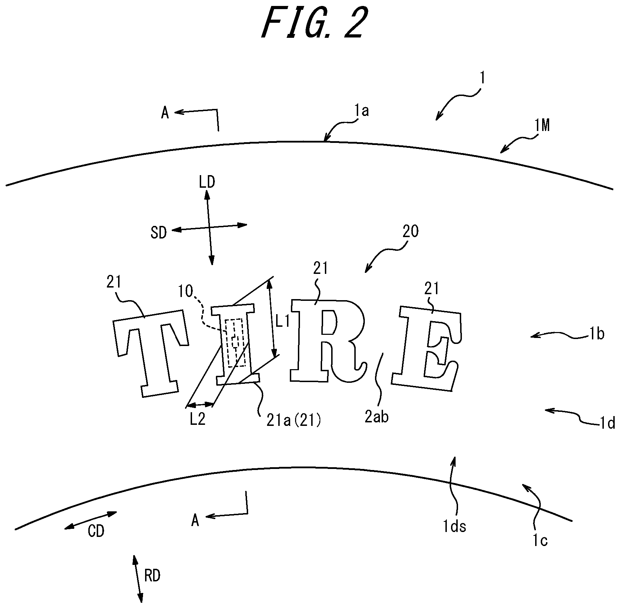

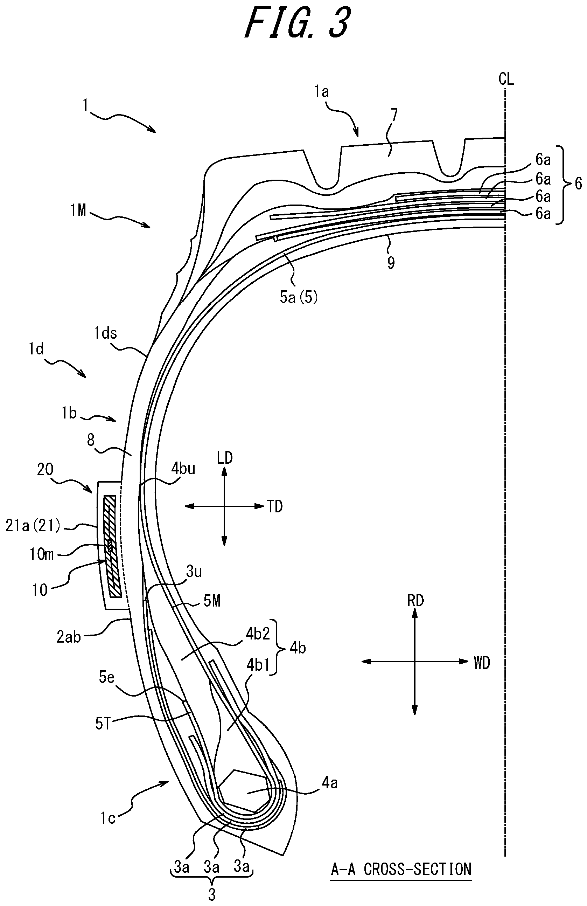

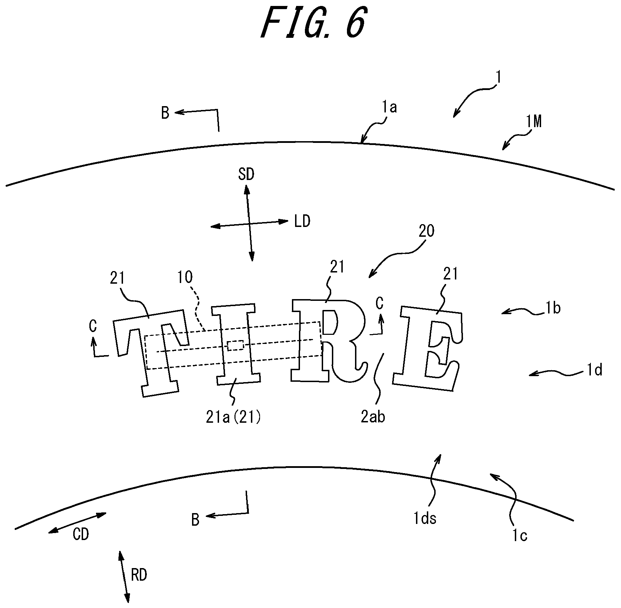

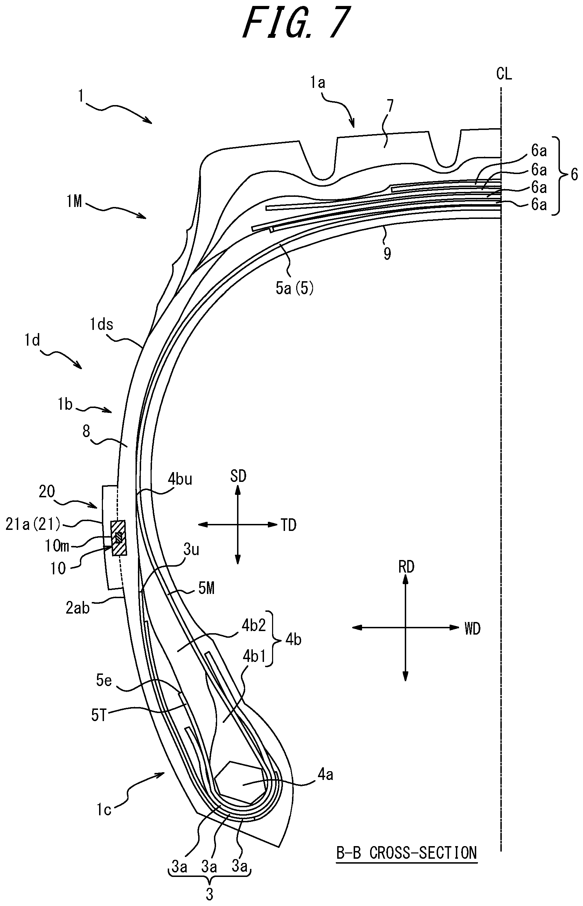

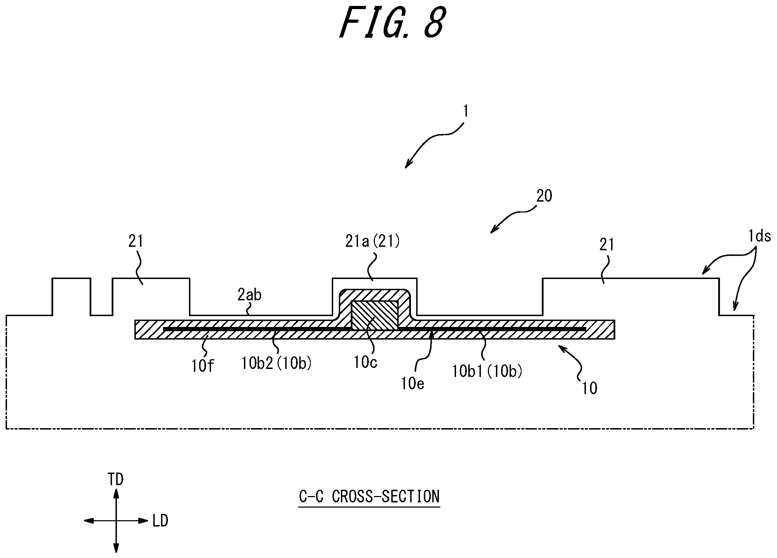

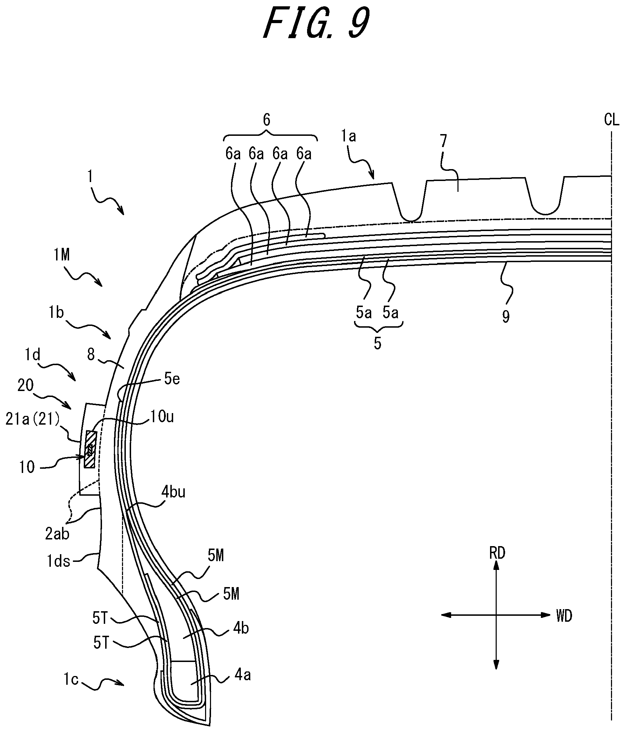

FIG. 1 to FIG. 3 are drawings for describing a tire 1 according to a first embodiment of the present invention. FIG. 1 is a side view illustrating a portion of a tire side portion of the tire according to the first embodiment of the present invention as viewed from a tire width direction outer side. FIG. 2 is an enlarged view illustrating an enlargement of a portion of FIG. 1. FIG. 3 is a cross-sectional view in the tire width direction illustrating a portion of the tire (specifically, a portion on one side relative to a tire equatorial plane CL) in FIG. 2 in cross section along the A-A line in FIG. 2. FIG. 6 to FIG. 8 are drawings for describing a tire 1 according to a second embodiment of the present invention. FIG. 6 is a side view illustrating a portion of a tire side portion of the tire according to the second embodiment of the present invention as viewed from the tire width direction outer side. FIG. 7 is a cross-sectional view, in the tire width direction, illustrating a portion of the tire (specifically, a portion on one side relative to the tire equatorial plane CL) in FIG. 6 in cross section along the B-B line in FIG. 6. FIG. 8 is a cross-sectional view illustrating a portion of the tire of FIG. 6 in cross section along the C-C line in FIG. 6. FIG. 9 is a drawing for describing a tire 1 according to a third embodiment of the present invention. FIG. 9 is a cross-sectional view, in the tire width direction, illustrating a portion of the tire (specifically, a portion on one side relative to the tire equatorial plane CL) according to the third embodiment of the present invention.

The tire 1 of each embodiment in FIG. 1 to FIG. 3 and FIG. 6 to FIG. 8 is configured as a truck/bus pneumatic tire. The tire 1 of the embodiment in FIG. 9 is configured as a passenger vehicle pneumatic tire. For convenience of explanation, these embodiments are described together below.

The tire 1 of any embodiment of the present invention may be configured as any type of tire.

The tire 1 includes a tire body 1M and a communication device 10. The tire body 1M corresponds to the portion of the tire 1 other than the communication device 10.

Hereafter, unless otherwise noted, the positional relationship and dimensions or the like of each element shall be measured in a standard state, with the tire 1 fitted to an applicable rim, a prescribed internal pressure applied, and no load applied. Further, in a state in which the tire 1 is fitted to an applicable rim, a prescribed internal pressure is applied, and no load is applied, a width in a tire width direction of a contact patch in contact with the ground is referred to as a ground contact width of the tire, and an end in the tire width direction of the ground contact width is referred to as a ground contact edge.

In the present specification, "applicable rim" (Measuring Rim in the STANDARDS MANUAL of ETRTO and Design Rim in the YEAR BOOK of TRA) refers to an approved rim of an applicable size as described by, or as described in the future by, valid industrial standards for the region in which a pneumatic tire is produced or used, such as the JATMA YEAR BOOK of JATMA (the Japan Automobile Tyre Manufacturers Association) in Japan, the STANDARDS MANUAL of ETRTO (European Tyre and Rim Technical Organization) in Europe, and the YEAR BOOK of TRA (The Tire and Rim Association, Inc.) in the U.S., and in a case in which a rim size is not as described in these industrial standards, the "applicable rim" refers to a rim with a width corresponding to a bead width of the pneumatic tire. The "applicable rim" includes current sizes as well as sizes that will be included in the future in the above industrial standards. Examples of a "size described in the future" may include sizes as described in "FUTURE DEVELOPMENTS" in the 2013 edition of the STANDARDS MANUAL of ETRTO.

In the present specification, "prescribed internal pressure" refers to an air pressure (maximum air pressure) corresponding to the maximum load capacity of a single wheel in an applicable size and ply rating as described in the JATMA YEAR BOOK or other industrial standards, and in case of a size that is not as described in the above industrial standard, the "prescribed internal pressure" refers to an air pressure (the maximum air pressure) corresponding to the maximum load capability prescribed for each vehicle on which the tire is installed. Additionally, in the present specification, "maximum load" means a load corresponding to the maximum load capability in a tire in an applicable size as described in the above industrial standards, or, in case of a size that is not as described in the above industrial standards, the "maximum load" means a load corresponding to the maximum load capability prescribed for each vehicle on which the tire is installed.

First, the following describes the tire body 1M.

As illustrated in drawings such as FIG. 3, FIG. 7, and FIG. 9., in each embodiment described herein, the tire body 1M includes a tread portion 1a, a pair of sidewall portions 1b that extend to a tire radial direction inner side from both ends, in the tire width direction, of the tread portion 1a, and a pair of bead portions 1c that are disposed in ends of the tire radial direction inner side of each sidewall portion 1b. The tread portion 1a is a portion, in the tire width direction, of the tire body 1M between a pair of ground contact edges. When the tire is 1 is fitted to a rim, the bead portions 1c are configured to contact the rim at the tire radial direction inner side and a tire width direction outer side.

The tire body 1M has a pair of tire side portions 1d that extend to the tire radial direction inner side from both ends, in the tire width direction, of the tread portion 1a. The tire side portions 1d are composed of the sidewall portions 1b and the bead portions 1c. In the present specification, a surface of the tire outer side on the tire side portion 1d is referred to as a "tire outer surface 1ds of the tire side portion 1d".

The tire body 1M also includes a pair of bead cores 4a, a pair of bead fillers 4b, a carcass 5, a belt 6, tread rubber 7, side rubber 8, and an inner liner 9.

Each bead core 4a is respectively embedded in a corresponding bead portion 1c. The bead cores 4a include multiple bead wires with a periphery covered with rubber. The bead wires are preferably made of a metal (for example, steel). The bead wires can, for example, be composed of monofilaments or stranded wires. The bead wires may be formed from organic fibers or carbon fibers.

Each bead filler 4b is respectively positioned in the tire radial direction outer side with respect to a corresponding bead core 4a. The bead fillers 4b extend tapering to the tire radial direction outer side. The bead fillers 4b are, for example, rubber.

The bead fillers may be referred to as "stiffeners".

As illustrated in FIG. 3 and FIG. 7, when the tire body 1M (and thus the tire 1) is configured as a truck/bus pneumatic tire, the bead fillers 4b may be formed from multiple bead filler portions 4b1 and 4b2 (two in each example in FIG. 3 and FIG. 7). These multiple bead filler portions 4b1 and 4b2 can, for example, differ in hardness. These multiple bead filler portions 4b1 and 4b2 are, for example, arranged (layered) along the tire radial direction.

The carcass 5 spans between the pair of bead cores 4a and extends toroidally. The carcass 5 is formed from one or more carcass plies 5a. Each carcass ply 5a includes one or more carcass cords and a coating rubber covering the carcass cords. The carcass cords can be formed from monofilaments or stranded wires.

The carcass cords may be formed from organic fibers composed of polyester, nylon, rayon, aramid, or the like, and may be formed from a metal (for example, steel). When the tire 1 is configured as a truck/bus pneumatic tire, the carcass cords are preferably formed from a metal (for example, steel). When the tire 1 is configured as a passenger vehicle pneumatic tire, the carcass cords are preferably formed from organic fibers composed of polyester, nylon, rayon, aramid, or the like.

The carcass plies 5a includes a ply main body 5m positioned between the pair of bead cores 4a. The carcass plies 5a may further include a ply foldback portion 5T that folds back from both ends of the ply main body 5M and around each bead core 4a from the tire width direction inner side to the tire width direction outer side. However, the carcass plies 5a may not necessarily include a ply foldback portion 5T. The carcass 5 may preferably have a radial structure, but may also have a biased structure.

The belt 6 is arranged on the tire radial direction outer side with respect to a crown portion of the carcass 5. The belt 6 includes one or more belt layers 6a. Each belt layer 6a includes one or more belt cords and a coating rubber covering the belt cords. The belt cords can be formed from monofilaments or stranded wires. The belt cords may be formed from a metal (for example, steel) or formed from organic fibers composed of polyester, nylon, rayon, aramid, or the like.

The tread rubber 7 is positioned in the tread portion 1a, on the tire radial direction outer side of the belt 6. The tread rubber 7 forms a tread surface, which is a surface of the tire radial direction outer side of the tread portion 1a. A tread pattern is formed on the tread surface.

The side rubber 8 is positioned in the sidewall portion 1b, on the tire width direction outer side of the carcass 5. The side rubber 8 forms a surface of the tire width direction outer side of the sidewall portion 1b. The side rubber 8 is integrally formed with the tread rubber 7.

The inner liner 9 is arranged on the tire inner side of the carcass 5 and, for example, may be layered on the tire inner side of the carcass 5. The inner liner 9 is, for example, formed from a butyl-based rubber with low air permeability. Butyl-based rubbers encompass, for example, butyl rubber and halogenated butyl rubber, which is a derivative thereof. The inner liner 9 is not limited to butyl-based rubber, and can be made of other rubber compositions, resins, or elastomers.

As illustrated in FIG. 3 and FIG. 7, when the tire body 1M (and thus the tire 1) is configured as a truck/bus pneumatic tire, the tire body 1M may include a reinforcement member 3 around each bead core 4a. The reinforcement member 3 may be arranged on an opposite side of the bead core 4a from the carcass 5, as in each example in FIG. 3 and FIG. 7. The reinforcement member 3 includes one or more reinforcement plies 3a (three in each example in FIG. 3 and FIG. 7). Each reinforcement ply 3a includes reinforcement cords. The reinforcement cords may be formed from a metal (for example, steel) or formed from organic fibers composed of polyester, nylon, rayon, aramid, or the like.

In each embodiment described herein, the tire body 1M includes one or more marking portions 20 disposed on the tire outside surface 1ds of the tire side portion 1d. The marking portions 20 are formed from the side rubber 8. As illustrated in FIG. 1, FIG. 2, and FIG. 6, the marking portions 20 have one or more markings 21. Each marking 21 forms a letter, a symbol, or a graphic. A graphic is a concept that encompasses barcodes and patterns. In each example in FIG. 1, FIG. 2, and FIG. 6, the marking portion 20 has four markings 21 that form four letters "T", "I", "R", and "E". The marking portion 20 can represent, for example, a company name, trade name, logo, tire size, or the like. Each marking 21 is formed in a convex shape. Specifically, each marking 21 protrudes further to the tire width direction outer side than a base surface 2ab on the tire outer surface 1ds of the tire side portion 1d. The base surface 2ab corresponds to a background surface in the marking portion 20 and specifically refers to the portion of the tire outer surface 1ds of the tire side portion 1d that surrounds each marking 21, as illustrated in FIG. 3, FIG. 7, and FIG. 9. The base surface 2ab may be a smooth planar surface with no irregularities, or the base surface 2ab may be an uneven surface with finer irregularities than the markings 21. In each example in FIG. 1, FIG. 2, and FIG. 6, the marking portion 20 has multiple markings 21. These multiple marking 21 are arranged along the tire circumferential direction. However, the multiple markings 21, which form the marking portion 20, may be arranged along any direction.

The following describes the communication device 10.

The communication device 10 may have a configuration that is capable of wireless communication with a prescribed external device (for example, a reader or a reader/writer) that is external to the tire 1, and the configuration of the communication device 10 is not particularly limited.

The communication device 10 preferably has an RF tag. The RF tag may also be referred to as an "RFID tag". The RF tag is preferably configured to be passive, but may be configured to be active.

The communication device 10 may have, instead of or in addition to an RF tag, an accelerometer for detecting an acceleration of the tire 1, an internal pressure sensor for detecting an internal pressure of the tire 1, or the like.

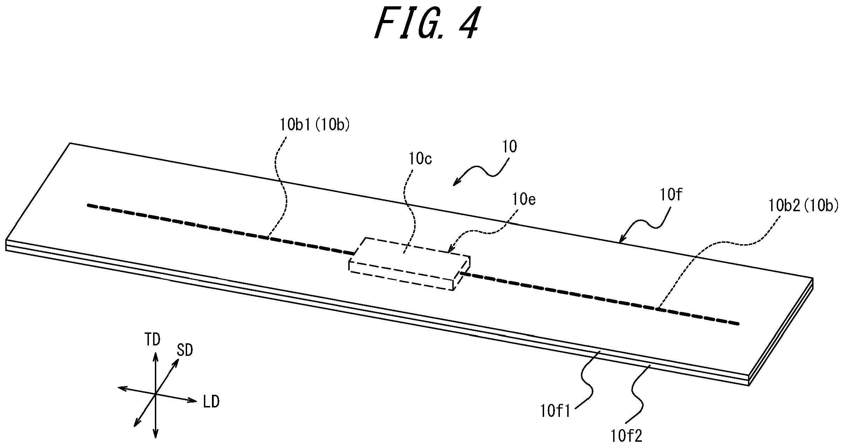

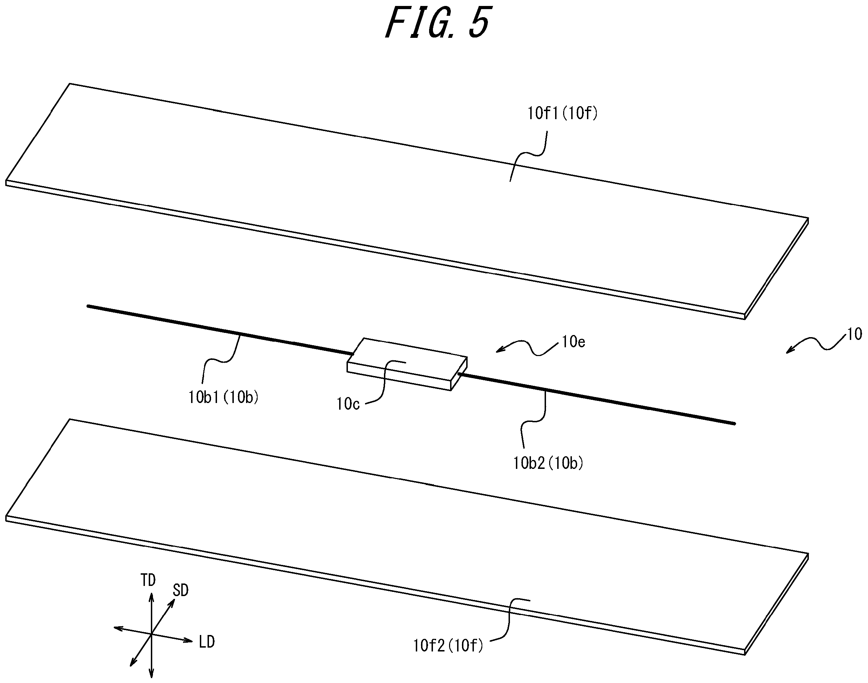

FIG. 4 and FIG. 5 illustrate an example of the communication device 10. In the present example, the communication device 10 has an RF tag. In the present example, the communication device 10 includes an RF tag 10e and a cover 10f. The RF tag 10e includes an IC chip 10c and an antenna section 10b. The RF tag 10e is configured to be passive.

The IC chip 10c operates, for example, by dielectric electromotive force generated by radio waves received at the antenna section 10b. The IC chip 10c, for example, has a controller and a memory unit.

The memory unit may store any information. For example, the memory unit may store identification information for the tire 1. The identification information for the tire 1 is, for example, unique identification information for the tire 1 that can identify each tire to each tire, such as the manufacturer of the tire 1, the manufacturing plant, the date of manufacture. The memory unit may also store tire history information such as running distance of the tire, the number of sudden brakings, the number of sudden starts, and the number of sudden cornering situations. For example, sensors that detect tire internal temperature, tire internal pressure, tire acceleration, or the like are disposed in the tire cavity, and the memory unit may store detection information detected by these sensors. In this case, the RF tag 10e can acquire the detection information from a sensor by communicating wirelessly with the sensor through the antenna section 10b.

The controller is configured to be able to read out information from the memory unit.

The antenna section 10b has a pair of antennas 10b1, 10b2. The pair of antennas 10b1, 10b2 are connected to ends, positioned on opposite sides to each other, of the IC chip 10c. The antenna section 10b is configured to be capable of transmitting to and receiving from the above prescribed external device that is external to the tire 1. In the examples in FIG. 4 and FIG. 5, each antenna 10b1, 10b2 extends linearly, but each antenna 10b1, 10b2 may extend to form any shape, for example, a wavy shape or the like.

The cover 10f covers the entirety of the RF tag 10e. The cover 10f is formed, for example, from rubber or resin.

In the present example, the cover 10f has a pair of sheet-shaped cover members 10f1, 10f2. The paired cover members 10f1, 10f2 overlap each other with the RF tag 10e therebetween. The paired cover members 10f1, 10f2 are preferably fixed to each other by adhesion or the like.

However, the cover 10f may be formed from a single member.

In the present example, the cover 10f has a rectangular shape in a planar view, but the cover 10f may have any shape in a planar view.

The communication device 10 may have no cover 10f, i.e., the communication device 10 may be formed from only the RF tag 10e.

The communication device 10 configured in this manner is configured to be capable of receiving, by the antenna section 10b, information transmitted over radio waves or magnetic fields from the prescribed external device. Rectification (in the case of radio waves) or resonance (in the case of magnetic fields) generates power in the antenna section 10b of the communication device 10, and the memory unit and the controller of the IC chip 10c performs a prescribed operation. For example, the controller reads out the information in the memory unit and returns (transmits) the information to the prescribed external device from the antenna section 10b over radio waves or magnetic fields. The prescribed external device receives the radio waves or the magnetic fields from the communication device 10. By retrieving the received information, the prescribed external device can acquire the information stored in the memory unit of the IC chip 10c of the communication device 10.

However, the communication device 10 may have any configuration that is different from this example.

The communication device 10 may have a longitudinal direction LD, a lateral direction SD, and a thickness direction TD. The longitudinal direction LD, the lateral direction SD, and the thickness direction TD are perpendicular to each other.

As illustrated in FIG. 4 and FIG. 5, when the communication device 10 has an RF tag 10e, the longitudinal direction LD of the communication device 10 is parallel to an extension direction of the antenna section 10b. When each antenna 10b1, 10b2 of the antenna section 10b has a wavy shape, the extension direction of the antenna section 10b refers to an extension direction of the amplitude centerline of the wavy shape formed by each antenna 10b1, 10b2. In the communication device 10, the thickness direction TD of the communication device 10 refers to the thickness direction of the cover 10f when the communication device 10 has the cover 10f. The thickness direction TD of the communication device 10 refers to the thickness direction of the IC chip 10c when the communication device 10 has no cover 10f.

The length of the RF tag 10e in the longitudinal direction LD is preferably, for example, 20 mm or greater, or 50 mm or greater. The length of the RF tag 10e in the longitudinal direction LD is preferably, for example, 100 mm or less, or 70 mm or less.

The length of the RF tag 10e in the lateral direction SD is preferably, for example, 10 mm or less, or 8 mm or less.

The length of the RF tag 10e in the thickness direction TD is preferably, for example, 5 mm or less, or 2 mm or less.

When the communication device 10 has the cover 10f, the length of the communication device 10 in the longitudinal direction LD is preferably, for example, 30 mm or greater, or 60 mm or greater. The length of the RF tag 10e in the longitudinal direction LD is preferably, for example, 110 mm or less, or 80 mm or less.

When the communication device 10 has the cover 10f, the length of the communication device 10 in the lateral direction SD is preferably, for example, 20 mm or less, or 15 mm or less.

When the communication device 10 has the cover 10f, the length of the communication device 10 in the thickness direction TD is preferably, for example, 6 mm or less, or 3 mm or less.

The thickness of each cover member 10f1, 10f2 of the cover 10f is preferably, for example, 0.5 mm or greater. The thickness of each cover member 10f1, 10f2 of the cover 10f is preferably, for example, 1 mm or less.

In each embodiment described herein, the entirety of the communication device 10 is embedded within the tire body 1M, as illustrated in FIG. 1 to FIG. 3 and FIG. 6 to FIG. 9. The communication device 10 is embedded in a part of the tire side portion 1d of the tire body 1M that is further to the tire width direction outer side than the carcass 5. The communication device 10 is at least partially embedded within at least one marking 21 (21a). The communication device 10 is oriented such that the thickness direction TD of the communication device 10 approximately follows a protrusion height direction of the marking 21a (FIG. 3 and FIG. 7).

During the production of the tire 1, a raw tire, which forms the tire body 1M, and the communication device 10 are placed inside a mold for forming a tire and vulcanized to form the tire 1.

The following describes the effects of each embodiment described herein.

First, as described above, for each embodiment described herein, as illustrated in FIG. 1 to FIG. 3 and FIG. 6 to FIG. 9, the communication device 10 is at least partially embedded within at least one marking 21 of the marking portion 20 that is disposed on the tire outer surface 1ds of the tire side portion 1d. That is, the communication device 10 is arranged in the tire side portion 1d. In general, a metal may weaken the radio waves between the communication device 10 and the prescribed external device (for example, a reader or a reader/writer), thereby reducing the communication performance between the communication device 10 and the prescribed external device, which in turn may shorten a communication distance between the communication device 10 and the prescribed external device. However, for the tire body 1M, a metal (for example, steel) can be used for the carcass 5, the belt 6, the bead cores 4a, the reinforcement members 3, or the like. Further, in general, the tire side portion 1d tends to have less metal compared to the tread portion 1a. Accordingly, by arranging the communication device 10 in the tire side portion 1d, the communication performance can be improved, thereby enabling lengthening of the communication distance between the communication device 10 and the prescribed external device compared to a case in which the communication device 10 is arranged in the tread portion 1a.

As mentioned above, in each embodiment described herein, at least a portion of the communication device 10 is embedded within at least one marking 21, as illustrated in FIG. 1 to FIG. 3 and FIG. 6 to FIG. 9. A configuration in this manner enables the distance between the communication device 10 and any metal that may be used inside the tire body 1M to be longer compared to a case in which the entirety of the communication device 10 is embedded further to a portion in the tire inner side of the tire body 1M than in the marking portion 20 (and thus further to the tire inner side than the base surface 2ab). Therefore, the communication performance can be improved, enabling lengthening of the communication distance between the communication device 10 and the prescribed external device.

Further, by at least partially embedding the communication device 10 within at least one marking 21, the marking portion 20, which is easily visible from the outside, has an indicator function that indicates the position of the communication device 10 and thus the position of the communication device 10 becomes easier to grasp. Therefore, a worker who attempts to read the communication device 10 with the prescribed external device (for example, a reader or a reader/writer) can read the communication device 10 simply by holding the above prescribed external device near the marking portion 20, thereby facilitating the reading process. Another advantage of the marking portion 20 having the indicator function that indicates the position of the communication device 10 is that separately processing the tire side portion 1d to indicate the position of the communication device 10 is unnecessary.

Further, each marking 21 of the marking portion 20 has relatively little rubber flow during the manufacturing of the tire 1. Therefore, even if the communication device 10 is at least partially embedded within at least one marking 21, the communication device 10 is less susceptible to strain, which can suppress any reduction in the durability of the communication device 10.

For each embodiment described herein, of the markings 21 that form the marking portion 20, a marking 21a (21), within which the communication device 10 is embedded, has a protrusion height of preferably 0.4 mm or greater, and more preferably 1.5 mm or greater. Accordingly, the communication device can be further lengthened.

Further, for each embodiment described herein, of the markings 21 that form the marking portion 20, the marking 21a (21), within which the communication device 10 is embedded, has a protrusion height that may be, for example, 3.0 mm or less.

In measuring the protrusion height of the marking 21a, the height of the marking 21a from a hypothetical surface (indicated by a dotted line in FIG. 3, FIG. 7, and FIG. 9), which is a smooth extension of the base surface 2ab within the marking 21a, is measured along a perpendicular line to the hypothetical surface.

For each embodiment described herein, in each example in FIG. 1 to FIG. 3 and FIG. 9, the entirety of the communication device 10 may be embedded within any one marking 21 (21a) of the markings 21 that form the marking portion 20. In this case, the communication device 10 can be further positioned on the tire outer side, enabling further lengthening of the communication distance.

For each embodiment described herein, when the entirety of the communication device 10 is embedded within any one marking 21 (21a) as in each example in FIG. 1 to 3 and FIG. 9, the length (FIG. 2) of the marking 21a, within which the communication device 10 is embedded, is preferably 40 mm or greater, and more preferably 70 mm or greater as measured along the longitudinal direction LD of the communication device 10 at a center of the lateral direction SD of the communication device 10. Accordingly, the communication device 10 becomes easier to arrange in the recess for forming the marking 21a in the mold for forming a tire during tire manufacturing. Further, the design freedom in the alignment direction (orientation) and shape of the communication device 10 can be increased.

The length L1 (FIG. 2) of the marking 21a, within which the communication device 10 is embedded, may be, for example, 120 mm or less as measured along the longitudinal direction LD of the communication device 10 at the center of the lateral direction SD of the communication device 10.

The length L1 is measured along a hypothetical surface (indicated by a dotted line in FIG. 3, FIG. 7, and FIG. 9), which is a smooth extension of the base surface 2ab within the marking 21a. When the marking 21a has multiple portions separated from each other along the longitudinal direction LD of the communication device 10 at a center of the lateral direction SD of the communication device 10, the length L1 refers to the length of only the portion within which the communication device 10 is embedded.

For each embodiment described herein, when the entirety of the communication device 10 is embedded within any one marking 21 (21a) as in each example in FIG. 1 to FIG. 3 and FIG. 9, the length L2 (FIG. 2) of the marking 21a, within which the communication device 10 is embedded, is preferably 10 mm or greater, and more preferably 14 mm or greater as measured along the lateral direction SD of the communication device 10 at a center of the longitudinal direction LD of the communication device 10. Accordingly, the communication device 10 becomes easier to arrange in the recess for forming the marking 21a in the mold for forming a tire during tire manufacturing. Further, the design freedom in the alignment direction (orientation) and shape of the communication device 10 can be increased.

The marking 21a within which the communication device 10 is embedded may have a length L2 (Fig. 2) of, for example, 20 mm or less when measured along the lateral direction SD of the communication device 10 at the center of the longitudinal direction LD of the communication device 10.

The length L2 is measured along the hypothetical surface (indicated by a dotted line in FIG. 3, FIG. 7, and FIG. 9), which is a smooth extension of the base surface 2ab within the marking 21a. The length L2 refers to the length of only the portion within which the communication device 10 is embedded, when the marking 21a has a plurality of portions separated from each other along the lateral direction SD of the communication device 10 at the center of the longitudinal direction LD of the communication device 10.

In each embodiment described herein, in the examples in FIG. 6 to FIG. 8, the communication device 10 may be only partially embedded inside at least one marking 21 (21a) of the markings 21 that form the marking portion 20. In this case, other portions of the communication device 10 may be positioned further to the tire inner side than the at least one marking 21 (21a). For example, when the communication device 10 has an RF tag 10e, as in the examples in FIG. 6 to FIG. 8, at least a portion of the IC chip 10c of the RF tag 10e may be positioned within the marking 21a, and the antenna section 10b of the RF tag 10e may be positioned further to the tire inner side than the marking 21a. In the examples in FIG. 6 to FIG. 8, only a portion of the communication device 10 is embedded inside any one marking 21(21a) of the markings 21 that form the marking portion 20.

In each embodiment described herein, the alignment direction (orientation) of the communication device 10 is arbitrary, and in terms of the durability of the communication device 10 or the like, the communication device 10 is preferably aligned such that the longitudinal direction LD of the communication device 10 approximately follows the tire circumferential direction as in the examples in FIG. 6 to FIG. 8. However, the communication device 10 may be aligned such that the lateral direction LD of the communication device 10 approximately follows the tire circumferential direction as in the examples in FIG. 1 to FIG. 3.

In each embodiment described herein, the communication device 10 is preferably arranged in the sidewall portion 1b, as in FIG. 3, FIG. 7, and FIG. 9. In general, the sidewall portion 1b tends to have less metal compared to the bead portion 1c. Accordingly, by arranging the communication device 10 in the sidewall portion 1b, communication performance can be improved, thereby enabling lengthening of the communication distance between the communication device 10 and the prescribed external device compared to the communication device 10 being arranged in the bead portion 1c.

In each embodiment described herein, when the tire 1 is configured as a truck/bus pneumatic tire (FIG. 1 to FIG. 3 and FIG. 6 to FIG. 8), a tire radial direction center 10m of the communication device 10 (more preferably, the entirety of the communication device 10) is preferably further to the tire radial direction outer side than a tire radial direction outer end of the bead core 4a. Accordingly, the communication performance can be improved, thereby enabling lengthening of the communication distance between the communication device 10 and the prescribed external device.

In each embodiment described herein, when the tire 1 is configured as a truck/bus pneumatic tire (FIG. 1 to FIG. 3 and FIG. 6 to FIG. 8), the tire direction radial center 10m of the communication device 10 (more preferably, the entirety of the communication device 10) is preferably further to the tire radial direction outer side than a tire radial direction outer end 5e of the ply foldback portion 5T of the carcass 5. Accordingly, the communication performance can be improved, thereby enabling lengthening of the communication distance between the communication device 10 and the prescribed external device. The durability of the communication device 10 and thus the tire 1 can also be improved because the communication device 10 can be arranged in a portion of the tire body 1M with comparatively less distortion during rolling and other movements of the tire 1.

Here, "tire radial direction outer end 5e of the ply foldback portion 5T of the carcass 5" refers to a tire radial direction outer end that is furthest to the tire radial direction outer side among tire radial direction outer ends of the ply foldback portion 5T of each carcass ply 5a of the carcass 5.

In each embodiment described herein, when the tire 1 is configured as a truck/bus pneumatic tire (FIG. 1 to FIG. 3 and FIG. 6 to FIG. 8), the tire radial direction center 10m of the communication device 10 (more preferably, the entirety of the communication device 10) is preferably further to the tire radial direction outer side than the tire radial direction outer end 3u of the reinforcement member 3. Accordingly, the communication performance can be improved, thereby enabling lengthening of the communication distance between the communication device 10 and the prescribed external device. The durability of the communication device 10 and thus the tire 1 can also be improved because the communication device 10 can be arranged in a portion of the tire body 1M with comparatively less distortion during rolling and other movements of the tire 1.

Here, "tire radial direction outer end 3u of the reinforcement member 3" refers to a tire radial direction outer end that is furthest to the tire radial direction outer side among tire radial direction outer ends of each reinforcement ply 3a of the reinforcement member 3.

In each embodiment described herein, when the tire 1 is configured as a truck/bus pneumatic tire (FIG. 1 to FIG. 3 and FIG. 6 to FIG. 8), the tire radial direction center 10m of the communication device 10 (more preferably, the entirety of the communication device 10) is preferably further to the tire radial direction inner side than a tire radial direction outer end 4bu of the bead filler 4b. Accordingly, the communication performance can be improved, thereby enabling lengthening of the communication distance between the communication device 10 and the prescribed external device. The durability of the communication device 10 and thus the tire 1 can also be improved because the communication device 10 can be arranged in a portion of the tire body 1M with comparatively less distortion during rolling and other movements of the tire 1.

A distance in the tire radial direction between the tire radial direction center 10m of the communication device 10 and the tire radial direction outer end 4bu of the bead filler 4b is preferably 1 to 30 mm, and more preferably 5 to 15 mm.

In each embodiment described herein, when the tire 1 is configured as a truck/bus pneumatic tire (FIG. 1 to FIG. 3 and FIG. 6 to FIG. 8), the tire radial direction outer end 5e of the ply foldback portion 5T of the carcass 5 is preferably positioned further to the tire radial direction inner side than the tire radial direction outer end 4bu of the bead filler 4b. The tire radial direction outer end 5e of the ply foldback portion 5T of the carcass 5 may be positioned either in the same tire radial direction position as the tire radial direction outer end 4bu of the bead filler 4b or further to the tire radial direction outer side.

In each embodiment described herein, when the tire 1 is configured as a truck/bus pneumatic tire (FIG. 1 to FIG. 3 and FIG. 6 to FIG. 8), the tire radial direction outer end 3u of the reinforcement member 3 is preferably positioned further to the tire radial direction inner side than the tire radial direction outer end 4bu of the bead filler 4b. The tire radial direction outer end 3u of the reinforcement member 3 may be positioned either in the same tire radial direction position as the tire radial direction outer end 4bu of the bead filler 4b or further to the tire radial direction outer side.

In each embodiment described herein, when the tire 1 is configured as a truck/bus pneumatic tire (FIG. 1 to FIG. 3 and FIG. 6 to FIG. 8), the tire radial direction outer end 5e of the ply foldback portion 5T of the carcass 5 may be positioned further to the tire radial direction inner side than a tire maximum width position of the tire body 1M as in each example in FIG. 1 to FIG. 3 and FIG. 6 to FIG. 8. The tire radial direction outer end 5e of the ply foldback portion 5T of the carcass 5 may be positioned in the same tire radial direction position as the tire maximum width position of the tire body 1M. The tire radial direction outer end 5e of the ply foldback portion 5T of the carcass 5 may be positioned further to the tire radial direction outer side than the tire maximum width position of the tire body 1M.

The "tire maximum width position of the tire body 1M" is a tire radial direction position at which the tire body 1M has the largest dimension in the tire width direction.

In each embodiment described herein, when the tire 1 is configured as a truck/bus pneumatic tire (FIG. 1 to FIG. 3 and FIG. 6 to FIG. 8), the tire radial direction outer end 3u of the reinforcement member 3 may be positioned further to the tire radial direction inner side than a tire maximum width position of the tire body 1M as in each example in FIG. 1 to FIG. 3 and FIG. 6 to FIG. 8. The tire radial direction outer end 3u of the reinforcement member 3 may be positioned in the same tire radial direction position as the tire maximum width position of the tire body 1M. The tire radial direction outer end 3u of the reinforcement member 3 may be positioned further to the tire radial direction outer side than a tire maximum width position of the tire body 1M.

In each embodiment described herein, when the tire 1 is configured as a passenger vehicle pneumatic tire (FIG. 9), the tire radial direction outer end 10u of the communication device 10 (more preferably, the entirety of the communication device 10) is preferably further to the tire radial direction outer side than the tire radial direction outer end of the bead core 4a, more preferably further to the tire radial direction outer side than a tire radial direction center of the bead filler 4b, and, for example, preferably further to the tire radial direction outer side than a tire radial direction outer end 4bu of the bead filler 4b.

In each embodiment described herein, when the tire 1 is configured as a passenger vehicle pneumatic tire (FIG. 9) and the communication device 10 is arranged in the sidewall portion 1b as described above, the tire radial direction outer end 10u of the communication device 10 is preferably positioned further to the tire radial direction inner side than the tire radial direction outer end 5e of the ply foldback portion 5T of the carcass 5 as in the example in FIG. 9. Accordingly, the communication performance can be improved, thereby enabling lengthening of the communication distance between the communication device 10 and the prescribed external device. The durability of the communication device 10 and thus the tire 1 can also be improved because the communication device 10 can be arranged in a portion of the tire body 1M with comparatively less distortion during rolling and other movements of the tire 1.

A distance, in the tire radial direction, between the tire radial direction outer end 10u of the communication device 10 and the tire radial direction outer end 5e of the ply foldback portion 5T of the carcass 5 is preferably 3 to 30 mm, and more preferably 5 to 15 mm.

In each embodiment described herein, when the tire 1 is configured as a passenger vehicle pneumatic tire (FIG. 9), the tire radial direction outer end 5e of the ply foldback portion 5T of the carcass 5 is positioned further to the tire radial direction outer side than the tire radial direction outer end 4bu of the bead filler 4b, as in the example in FIG. 9. However, the tire radial direction outer end 5e of the ply foldback portion 5T of the carcass 5 may be positioned either in the same tire radial direction position as the tire radial direction outer end of the bead filler 4b, or further to the tire radial direction inner side.

In each embodiment described herein, when the tire 1 is configured as a passenger vehicle pneumatic tire (FIG. 9), the tire radial direction outer end 5e of the ply foldback portion 5T of the carcass 5 may be positioned further to the tire radial direction outer side than a tire maximum width position of the tire body 1M. The tire radial direction outer end 5e of the ply foldback portion 5T of the carcass 5 may be positioned in the same tire radial direction position as the tire maximum width position of the tire body 1M. The tire radial direction outer end 5e of the ply foldback portion 5T of the carcass 5 may be positioned further to the tire radial direction inner side than the tire maximum width position of the tire body 1M. The "tire maximum width position of the tire body 1M" is a tire radial position at which the tire body 1M has the largest dimension in the tire width direction.

### INDUSTRIAL APPLICABILITY

A tire according to the present invention can be preferably used for any type of pneumatic tire, for example, a passenger vehicle pneumatic tire, a truck/bus pneumatic tire, or the like.

### REFERENCE SIGNS LIST

1: tire,
1M: tire body, 1a: tread portion, 1b: sidewall portion, 1c: bead portion, 1d: tire side portion, 1ds: tire outer surface of tire side portion, 2ab: base surface,
3: reinforcement member, 3a: reinforcing ply, 3u: tire radial direction outer end of reinforcement member,
4a: bead core, 4b: bead filler, 4b1, 4b2: bead filler portion, 4bu: tire radial direction outer end of bead filler,
5: carcass, 5a: carcass ply, 5M: ply main body, 5T: ply foldback portion, 5e: tire radial direction outer end of ply foldback portion of carcass,
6: belt, 6a: belt layer,
7: tread rubber, 8: side rubber,
9: inner liner
10: communication device,
10e: RF tag,
10b: antenna section, 10b1, 10b2: antenna,
10f: cover, 10f1, 10f2: cover member,
10c: IC chip,
10u: tire radial direction outer end of communication device,
10m: tire radial direction center of communication device,
20: marking portion, 21, 21a: marking,
CL: tire equatorial plane,
WD: tire width direction, RD: tire radial direction, CD: tire circumferential direction,
LD: longitudinal direction of communication device, SD: lateral direction of communication device, TD: thickness direction of communication device

## Claims

1. A tire (1) comprising:
a marking portion (20) disposed on a tire outer surface of a tire side portion (1d); and
a communication device (10),
wherein the marking portion (20) has one or more markings(21),
each of the one or more markings (21) forms a letter, a symbol, or a graphic and is formed into a convex shape,
each of the one or more markings (21) protrudes further in a tire width direction outer side than a base surface (2ab) of the tire outer surface (1ds) of the tire side portion (1d), the base surface (2ab) being a portion of the tire outer surface (1ds) of the tire side portion (1d) that surrounds each of the one or more markings (21), **characterized in that**
at least a part of the communication device (10) is embedded within at least one of the one or more markings (21), the at least one of the one or more markings (21) forming a letter.

2. The tire (1) according to claim 1, wherein the marking (21a) within which the communication device (10) is embedded has a protrusion height of 0.4 mm or greater.

3. The tire (1) according to claim 1 or 2, wherein the entirety of the communication device (10) is embedded within any one of the one or more markings (21a).

4. The tire (1) according to claim 3, wherein the marking (21a) within which the communication device (10) is embedded has a length L1 of 40 mm or more as measured along a longitudinal direction of the communication device (10) at a center of a lateral direction of the communication device (10).

5. The tire (1) according to claim 3 or 4, wherein the marking (21a) within which the communication device (10) is embedded has a length L2 of 10 mm or more as measured along a lateral direction of the communication device (10) at a center of a longitudinal direction of the communication device (10).

6. The tire (1) according to any one of claims 1 to 5, wherein the communication device (10) has an RF tag (10e).

## Patentansprüche

1. Reifen (1), umfassend:
einen Markierungsabschnitt (20), der auf einer Reifenaußenfläche eines Reifenseitenabschnitts (1d) angeordnet ist; und
eine Kommunikationsvorrichtung (10),
wobei der Markierungsabschnitt (20) eine oder mehrere Markierungen (21) aufweist,
jede der einen oder der mehreren Markierungen (21) einen Buchstaben, ein Symbol oder eine Grafik bildet und zu einer konvexen Form gebildet ist,
jede der einen oder der mehreren Markierungen (21) weiter in einer Reifenbreitenrichtungs-Außenseite vorspringt als eine Basisfläche (2ab) der Reifenaußenfläche (1ds) des Reifenseitenabschnitts (1d), wobei die Basisfläche (2ab) ein Abschnitt der Reifenaußenfläche (1ds) des Reifenseitenabschnitts (1d) ist, der jede der einen oder der mehreren Markierungen (21) umgibt, **dadurch gekennzeichnet, dass**
mindestens ein Teil der Kommunikationsvorrichtung (10) innerhalb mindestens einer der einen oder der mehreren Markierungen (21) eingebettet ist, wobei die mindestens eine der einen oder der mehreren Markierungen (21) einen Buchstaben bildet.

2. Reifen (1) nach Anspruch 1, wobei die Markierung (21a), innerhalb der die Kommunikationsvorrichtung (10) eingebettet ist, eine Vorsprungshöhe von 0,4 mm oder größer aufweist.

3. Reifen (1) nach Anspruch 1 oder 2, wobei die Gesamtheit der Kommunikationsvorrichtung (10) innerhalb einer der einen oder der mehreren Markierungen (21a) eingebettet ist.

4. Reifen (1) nach Anspruch 3, wobei die Markierung (21a), innerhalb der die Kommunikationsvorrichtung (10) eingebettet ist, entlang einer Längsrichtung der Kommunikationsvorrichtung (10) in einer Mitte einer Querrichtung der Kommunikationsvorrichtung (10) gemessen eine Länge L1 von 40 mm oder mehr aufweist.

5. Reifen (1) nach Anspruch 3 oder 4, wobei die Markierung (21a), innerhalb der die Kommunikationsvorrichtung (10) eingebettet ist, entlang einer Querrichtung der Kommunikationsvorrichtung (10) in einer Mitte einer Längsrichtung der Kommunikationsvorrichtung (10) gemessen eine Länge L2 von 10 mm oder mehr aufweist.

6. Reifen (1) nach einem der Ansprüche 1 bis 5, wobei die Kommunikationsvorrichtung (10) ein RF-Etikett (10e) aufweist.

## Revendications

1. Pneu (1) comprenant :
une partie de marquage (20) disposée sur une surface extérieure de pneu d'une partie latérale de pneu (1d) ; et
un dispositif de communication (10),
dans lequel la partie de marquage (20) présente un ou plusieurs marquages (21),
chacun des un ou plusieurs marquages (21) forme une lettre, un symbole ou un graphique et est façonné en une forme convexe,
chacun des un ou plusieurs marquages (21) fait saillie davantage dans le sens de la largeur du pneu, côté extérieur, qu'une surface de base (2ab) de la surface extérieure de pneu (1ds) de la partie latérale de pneu (1d), la surface de base (2ab) étant une partie de la surface extérieure de pneu (1ds) de la partie latérale de pneu (1d) qui entoure chacun des un ou plusieurs marquages (21), **caractérisé en ce que**
au moins une partie du dispositif de communication (10) est intégrée à l'intérieur d'au moins un des un ou plusieurs marquages (21), le au moins un des un ou plusieurs marquages (21) formant une lettre.

2. Pneu (1) selon la revendication 1, dans lequel le marquage (21a) dans lequel le dispositif de communication (10) est intégré présente une hauteur de saillie de 0,4 mm ou plus.

3. Pneu (1) selon la revendication 1 ou 2, dans lequel la totalité du dispositif de communication (10) est intégrée dans l'un quelconque des un ou plusieurs marquages (21a).

4. Pneu (1) selon la revendication 3, dans lequel le marquage (21a) dans lequel le dispositif de communication (10) est intégré présente une longueur L1 de 40 mm ou plus telle que mesurée le long d'une direction longitudinale du dispositif de communication (10) au centre d'une direction latérale du dispositif de communication (10).

5. Pneu (1) selon la revendication 3 ou 4, dans lequel le marquage (21a) dans lequel le dispositif de communication (10) est intégré présente une longueur L2 de 10 mm ou plus telle que mesurée le long d'une direction latérale du dispositif de communication (10) au centre d'une direction longitudinale du dispositif de communication (10).

6. Pneu (1) selon l'une quelconque des revendications 1 à 5, dans lequel le dispositif de communication (10) présente une étiquette RF (10e).
